# EUROPÄISCHE PATENTSCHRIFT

(11) **EP 1 321 276 B1**
(45) Veröffentlichungstag und Bekanntmachung des Hinweises auf die Patenterteilung: **12.12.2007**
(21) Anmeldenummer: 02028562.3
(22) Anmeldetag: 20.12.2002
(51) Int. Cl.: B29C 45/82, G05D 16/20

(54) **Spritzgiessmaschine mit Hydraulikspeicher**
Injection moulding machine with hydraulic accumulator
Machine de moulage par injection avec accumulateur hydraulique

(30) Priorität: 21.12.2001 DE 10163385; 27.02.2002 DE 10208589
(43) Veröffentlichungstag der Anmeldung: 25.06.2003
(73) Patentinhaber: Ferromatik Milacron Maschinenbau GmbH, D-79364 Malterdingen (DE)
(72) Erfinder: Birkhofer, Hans, 79312 Emmendingen (DE); Bold, Heinz, 79341 Kenzingen (DE); Kampschulze, Ulf, 79106 Freiburg (DE); Schneider, Michael Johannes, 79865 Grafenhausen (DE); Stoehr, Arno, 79312 Emmendingen (DE)
(74) Vertreter: Grättinger & Partner (GbR)

(56) Entgegenhaltungen:
- EP-A- 0 592 945
- DE-A- 3 431 382
- GB-A- 688 668
- GB-A- 2 071 783
- US-A- 6 120 711

## Beschreibung

Die vorliegende Erfindung betrifft eine Spritzgießmaschine mit einer Schließeinheit und mindestens einer Plastifizier- und Einspritzeinheit, wobei mindestens ein diskontinuierlich betätigbarer hydraulischer Verbraucher vorgesehen ist, mit den folgenden Merkmalen:
- der mindestens eine hydraulische Verbraucher ist über ein Ventil, das von einer Steuereinheit betätigbar ist, von mindestens einem Hydraulikspeicher beaufschlagbar;
- der mindestens eine Hydraulikspeicher ist von einer Hydraulikpumpe speisbar;
- dem mindestens einen Hydraulikspeicher ist ein Drucksensor, der mit der Steuereinheit in Verbindung steht, zugeordnet, wobei die Hydraulikpumpe von der Steuereinheit zugeschaltet wird, wenn der von dem Drucksensor überwachte Druck einen unteren Druckgrenzwert erreicht, und abgeschaltet wird, wenn der von dem Drucksensor überwachte Druck einen oberen Druckgrenzwert erreicht.

Bei hydraulischen Spritzgießmaschinen werden innerhalb eines Spritzzyklus verschiedene Funktionen (insbesondere Öffnen und Schließen der Form, Kernziehen, Auswerfen des Spritzlings) durch spezifische hydraulische Verbraucher ausgeführt. Grundsätzlich bestehen dabei zwei Möglichkeiten, die entsprechende Hydraulikanlage auszuführen, nämlich mit Hydraulikspeicher (vgl. z.B. EP 592945 B1, DE 3431382 A1, EP 576741 A1 und DE 4218556 A1) oder aber ohne Hydraulikspeicher (vgl. z.B. DE 19524395 C1, EP 649723 B1, US 6299427 B1 und EP 752304 A1). Hydraulikanlagen mit Hydraulikspeicher, wie sie sich insbesondere für den Einsatz in Verbindung mit Hochleistungs-Spritzgießmaschinen eignen, kommen dabei in der Regel mit einer einzigen Hydraulikpumpe aus; das - durch Einspeisung mittels der Hydraulikpumpe - in dem Hydraulikspeicher akkumulierte Hydraulikfluid, dessen gespeicherte Energie beispielsweise besonders rasche Schließbewegungen und/oder Spritzbewegungen und somit besonders kurze Zyklen ermöglicht, wird über von einer Steuereinheit gesteuerte Ventile - gegebenenfalls auch parallel - auf die einzelnen Verbraucher geleitet. Bei Hydraulikanlagen ohne Hydraulikspeicher werden demgegenüber - sofern nur eine Hydraulikpumpe vorgesehen ist - die einzelnen Verbraucher häufig seriell nacheinander gespeist, was zu unerwünscht langen Zyklen führen kann. Bisweilen werden bei Spritzgießmaschinen ohne Hydraulikspeicher auch mehrere Hydraulikpumpen vorgesehen, welche jeweils einzelne ihnen zugeordnete hydraulische Verbraucher speisen und hinsichtlich ihrer Leistungsdaten auf die spezifischen Verbraucher abgestimmt sind. In diesem Falle können mehrere hydraulische Verbraucher problemlos auch parallel betrieben werden; allerdings sind solche Spritzgießmaschinen mit mehreren Hydraulikpumpen technisch aufwendig und teuer.

Spritzgießmaschinen der eingangs angegebenen Art, d.h. mit Hydraulikspeicher, werden innerhalb der kunststoffverarbeitenden Industrie verbreitet eingesetzt. Auf derartige Spritzgießmaschinen bezieht sich beispielsweise die Firmenschrift "Die K-TEC-Baureihe - mit Schließkräften von 400 kN bis 4500 kN" der Ferromatik Milacron Maschinenbau GmbH, D-79364 Malterdingen. Über den Hydraulikspeicher wird der innerhalb eines Spritzzyklus (insbesondere zum Schließen der Form, Einspritzen der Schmelze, Nachdrücken, Öffnen der Form und Auswerfen des Spritzlings) erheblich schwankende Bedarf des mindestens einen hydraulischen Verbrauchers abgepuffert. Die Hydraulikpumpe braucht somit hinsichtlich ihrer Förderleistung nicht auf den maximalen Bedarf an Hydraulikfluid ausgelegt zu sein; vielmehr reicht bei einer mehr oder weniger kontinuierlich betriebenen Hydraulikpumpe eine im wesentlichen an dem mittleren Bedarf an Hydraulikfluid orientierte Auslegung, wobei der Hydraulikspeicher innerhalb eines Spritzzyklus in Phasen eines geringen Bedarfs an Hydraulikfluid geladen wird und in Phasen eines hohen Bedarfs an Hydraulikfluid den mindestens einen hydraulischen Verbraucher speist. Gemäß der DE 3431382 wird die den Hydraulikspeicher speisende Hydraulikpumpe in Neutralumlauf gesteuert, wenn der Druck in dem Hydraulikspeicher einen Maximalwert erreicht.

Das konkrete Profil für den Bedarf an Hydraulikfluid innerhalb eines Spritzzyklus richtet sich nach dem einzelnen Spritzgießprozeß. Insbesondere werden je nach der Art des Spritzlings unterschiedliche Mengen an Hydraulikfluid für das Schließen der Form, daß Einspritzen der Schmelze, daß Öffnen der Form, das Kernziehen und das Auswerfen des Spritzlings benötigt. Liegt für den betreffenden Spritzgießprozeß der mittlere Bedarf an Hydraulikfluid unterhalb des Auslegungspunkts der Fördermenge der Hydraulikpumpe, so wird der Hydraulikspeicher - bei kontinuierlich oder diskontinuierlich arbeitender Hydraulikpumpe - intermittierend geladen, wobei, wie eingangs dargelegt, die Hydraulikpumpe zum Laden des Hydraulikspeichers bei einem von einem Drucksensor ermittelten unteren Druckgrenzwert (z.B. 180 bar) im Hydrauliksystem zuschaltbar und bei einem vom Drucksensor ermittelten oberen Druckgrenzwert (z.B. 195 bar) abschaltbar ist.

Bei solchen Spritzgießmaschinen, die sich im Hinblick auf die Funktion durchaus grundsätzlich bewährt haben, wird in Zeiten eines gesteigerten Umwelt- und Energiebewußtseins ein unbefriedigender Wirkungsgrad als nachteilig angesehen, indem - je nach dem individuellen Spritzgießprozeß - zum unnötigen Laden des Hydraulikspeichers eine mehr oder weniger große Energiemenge vergeudet wird. Auch wirkt sich ein Laden des Hydraulikspeichers über das für den betreffenden Spritzzyklus benötigte Druckniveau hinaus nachteilig auf die Lebensdauer der Spritzgießmaschine bzw. von deren Hydraulikanlage aus.

In der US-A 6120711 wird zum Zwecke der Steigerung der Qualität der Spritzgießerzeugnisse sowie des Wirkungsgrads der Spritzgießmaschine vorgeschlagen, den Beginn und das Ende des Ladens des Hydraulikspeichers statt über einen unteren und einen oberen, von einem Drucksensor überwachten Druckgrenzwert dergestalt in Abhängigkeit von genau festgelegten Betriebspunkten innerhalb des Spritzzyklus zu steuern, daß das Laden des Hydraulikspeichers exakt mit bestimmten Phasen des Spritzzyklus synchronisiert ist. Bei dem aus diesem Dokument bekannten Verfahren zur Steuerung des Ladens des Hydraulikspeichers einer Spritzgießmaschine wird mit dieser ein Lehrprogramm durchfahren, während dessen spezifische Größen ermittelt werden, die in einer arithmetischen Operation zur Festlegung der Betriebspunkte, an denen das Laden des Hydraulikspeichers beginnt und endet, verarbeitet werden.

Als nachteilig bei dem aus diesem Dokument bekannten System ist der erhebliche apparative und verfahrenstechnische Aufwand anzusehen. Ebenfalls ist nachteilig, daß dieses System, das auf fest eingestellten, für den Beginn und das Ende des Ladens des Hydraulikspeichers maßgeblichen Betriebspunkten aufbaut, nicht flexibel auf mögliche toleranzbedingte Schwankungen einzelner Betriebsparameter reagieren kann.

Vor dem Hintergrund des vorstehend dargelegten Standes der Technik liegt der vorliegenden Erfindung die Aufgabe zugrunde, eine Spritzgießmaschine der eingangs angegebenen Art zu schaffen, die sich bei einem vergleichsweise geringen apparativen und verfahrenstechnischen Aufwand und einer vergleichsweise hohen Toleranz gegenüber schwankenden Betriebsparametern durch einen hohen energetischen Nutzungsgrad und einen geringen Verschleiß auszeichnet.

Gelöst wird diese Aufgabe gemäß der vorliegenden Erfindung bei einer Spritzgießmaschine der gattungsgemäßen Art dadurch, daß die Spritzgießmaschine mindestens einen als Druckaufnehmer, als Kraftaufnehmer oder als Wegmeßsystem ausgeführten Betriebsparameteraufnehmer aufweist, der mit der Steuereinheit in Verbindung steht und während mindestens eines Meßzyklus' Meßwerte zu dem mindestens einen überwachten Betriebesparameter an die Steuereinheit meldet, wobei die Steuereinheit mindestens einen der beiden Druckgrenzwerte in Abhängigkeit von den durch den mindestens einen Betriebsparameteraufnehmer aufgenommenen Meßwerten festgelegt.

Die erfindungsgemäße Spritzgießmaschine orientiert sich somit an dem bewährten, robusten und gegenüber Schwankungen von Betriebsparametern toleranten Konzept, daß das Laden des Hydraulikspeichers unmittelbar in Abhängigkeit von dem in dem Hydrauliksystem, beispielsweise in dem Hydraulikspeicher selbst herrschenden Druck gesteuert wird, indem insbesondere die Steuereinheit zum Laden des Hydraulikspeichers die Hydraulikpumpe beim Erreichen eines unteren Druckgrenzwerts zuschaltet und beim Erreichen eines oberen Druckgrenzwerts abschaltet. Allerdings sind gemäß der vorliegenden Erfindung die beiden Druckgrenzwerte nicht fest eingestellt; vielmehr wird mindestens einer der beiden Druckgrenzwerte durch die Steuereinheit individuell für den spezifischen Spritzzyklus in Abhängigkeit von Meßwerten mindestens eines Betriebsparameters festgelegt, welche während mindestens eines Meßzyklus von einem Betriebsparameteraufnehmer ermittelt und in der Steuereinheit verarbeitet werden. Bevorzugt werden beide Druckgrenzwerte, d.h. sowohl der für den Beginn des Ladens des Hydraulikspeichers maßgebliche untere Druckgrenzwert als auch der für das Ende des Ladens des Hydraulikspeichers maßgebliche obere Druckgrenzwert individuell für den spezifischen Spritzzyklus in Abhängigkeit von Meßwerten mindestens eines Betriebsparameters festgelegt, welche während mindestens eines Meßzyklus von einem Betriebsparameteraufnehmer ermittelt und in der Steuereinheit verarbeitet werden. Bei der erfindungsgemäßen Spritzgießmaschine adaptiert sich somit, ohne daß das grundsätzliche Konzept verlassen wird, das Laden des Hydraulikspeichers selbsttätig an den individuellen, für das jeweilige Spritzgießerzeugnis maßgeblichen Spritzzyklus, so daß insbesondere ein unter energetischen Gesichtspunkten ungünstiges und verschleißförderndes Laden des Hydraulikspeichers über den für den betreffenden Spritzzyklus benötigten Druck hinaus vermieden wird.

Dadurch, daß die erfindungsgemäße Spritzgießmaschine an dem Konzept des druckabhängigen Ladens des Hydraulikspeichers, wie es in verbreitet eingesetzten herkömmlichen Spritzgießmaschinen realisiert ist, festhält, ergibt sich als bedeutender Vorteil der vorliegenden Erfindung die Möglichkeit, bestehende Spritzgießmaschinen mit vergleichsweise geringem Aufwand zu solchen nach der vorliegenden Erfindung umzurüsten.

Gemäß einer ersten bevorzugten Weiterbildung der Erfindung ist vorgesehen, daß das Speichervolumen des mindestens einen Hydraulikspeichers unabhängig von den beiden Druckgrenzwerten variabel ist, wobei die Steuereinheit die wirksame Größe des Speichervolumens in Abhängigkeit von den von dem mindestens einen Betriebsparameteraufnehmer erfaßten Meßwerten festlegt. Hiermit ist der bedeutende Vorteil verbunden, daß sich das absolute Druckniveau innerhalb des Hydraulikspeichers und der Differenzdruck zwischen dem unteren und dem oberen Druckgrenzwert von der in dem Hydraulikspeicher akkumulierten Menge an Hydraulikfluid entkoppeln lassen. Liegt ein entsprechendes Profil für den Bedarf der hydraulischen Verbraucher vor, so lassen sich insbesondere durch entsprechende Einstellung des wirksamen Speichervolumens auf einem vergleichsweise niedrigen Druckniveau relativ große Mengen Hydraulikfluid in dem Hydraulikspeicher akkumulieren. Auf diese Weise ist nicht länger erforderlich, den Hydraulikspeicher nur aus dem Grunde auf einem - sonst nicht benötigten, unter energetischen Gesichtspunkten ungünstigen - hohen Druckniveau zu laden, um in ihm eine bestimmte Menge Hydraulikfluid akkumulieren zu können.

Eine besonders bevorzugte Möglichkeit, das Speichervolumen des mindestens einen Hydraulikspeichers unabhängig von den Druckverhältnissen variieren zu können, liegt in einer Variation des Vorfülldrucks des mindestens einen Hydraulikspeichers. Dies wird weiter unten in größerem Detail erläutert.

Im Rahmen der vorliegenden Erfindung können zur Festlegung des mindestens einen variablen Druckgrenzwerts - unter Verwendung entsprechender geeigneter, als solches bekannter Betriebsparameteraufnehmer - Meßwerte zu verschiedensten Betriebsparametern ausgewertet werden. Vorrangig kommen als Betriebsparameteraufnehmer Druckaufnehmer, Kraftaufnehmer und Wegmeßsysteme zum Einsatz; in Betracht kommen als Betriebsparameteraufnehmer jedoch beispielsweise auch Geschwindigkeitsaufnehmer und andere Positionserfassungsmittel als Wegmeßsysteme. Ist der mindestens eine Betriebsparameteraufnehmer als Druckaufnehmer ausgeführt, so kann dieser als Betriebsparameter insbesondere den Druck im Werkzeug, im Angußkanal bzw. im Spritzzylinder und/oder den Druck im Schließzylinder überwachen. Ist demgegenüber der mindestens eine Betriebsparameteraufnehmer als Kraftaufnehmer ausgeführt, so kann er als Betriebsparameter die Schließkraft der Schließeinheit überwachen. Ist der mindestens eine Betriebsparameteraufnehmer als Wegmeßsystem ausgeführt, so kann er als Betriebsparameter insbesondere den Vorschub der Einspritzschnecke und/oder den Schließweg der Schließeinheit überwachen. Unabhängig davon, welcher Art nun der Betriebsparameteraufnehmer ist und welcher Betriebsparameter mit ihm konkret überwacht wird, jeweils wird der Meßwert mit einem in der Steuereinheit hinterlegten Sollwert für den betreffenden Betriebsparameter verglichen. Weicht der Meßwert um ein nicht tolerierbares Maß von dem hinterlegten Sollwert ab, so adaptiert die Steuereinheit selbsttätig den mindestens einen variablen Druckgrenzwert im Sinne einer Verringerung der Abweichung des Istwerts des überwachten Betriebsparameters vom entsprechenden Sollwert. Beispielsweise kann, wenn der mittels eines Druckaufnehmers überwachte tatsächliche Druck im Schließzylinder hinter dem in der Steuereinheit hinterlegten Sollwert zurückbleibt, der obere, für das Beenden des Ladens des Hydraulikspeichers maßgebliche Druckgrenzwert selbsttätig durch die Steuereinheit angehoben werden.

Zur Klarstellung ist festzustellen, daß bei der Überwachung des Druckes im Schließzylinder der Sollwert sich keineswegs zwingend auf den maximalen Schließdruck beziehen muß. Vielmehr kann auch ein vor dem Erreichen des maximalen Schließdrucks liegender Referenzdruck (Betriebsparameter) überwacht werden. Dies gilt namentlich für solche erfindungsgemäßen Spritzgießmaschinen, bei denen nur ein Teil der für den Aufbau des maximalen Schließdrucks erforderlichen Hydraulikflüssigkeit aus dem Hydraulikspeicher kommt, der verbleibende Teil hingegen direkt aus der Hydraulikpumpe oder einem Druckübersetzer. In diesem Falle könnte beispielsweise der Druck, der allein durch das Speisen der Schließeinheit aus dem Hydraulikspeicher entsteht, als Referenzdruck herangezogen werden.

Der mindestens eine Meßzyklus, während dessen Meßwerte zu dem mindestens einen überwachten Betriebsparameter erfaßt und an die Steuereinheit gemeldet werden, kann im Rahmen der vorliegenden Erfindung sowohl ein Leerzyklus ohne Einspritzung als auch ein Arbeitszyklus mit Einspritzung sein. Auch kommt eine Kombination von beiden Möglichkeiten in Betracht, indem Grundeinstellungen für den betreffenden, für das spezifische Spritzgießerzeugnis maßgeblichen Spritzzyklus im Rahmen eines Leerzyklus ermittelt werden und im Arbeitsbetrieb der Spritzgießmaschine die Einhaltung der vorgegebenen Betriebsparameter laufend überwacht wird und erforderlichenfalls die vorgenommenen Einstellungen nachgeführt werden.

Gemäß einer anderen bevorzugten Weiterbildung der Erfindung ist vorgesehen, daß die Spritzgießmaschine eine Speichereinheit zur Abspeicherung des mindestens einen variablen, für das spezifische Spritzprogramm von der Steuereinheit festgelegten Druckgrenzwerts und ggfs. das wirksame Speichervolumen auf einem Datenspeicher aufweist. Die entsprechenden, für den einzelnen Spritzling spezifischen Daten lassen sich auf diese Weise bei einer Umrüstung der Spritzgießmaschine von einem Spritzgießprozeß auf einen anderen Spritzgießprozeß problemlos in die Steuereinheit einspeichern. Dies macht das neuerliche Durchfahren eines Leerzyklus zur Ermittlung der Sollwerte für den mindestens einen überwachten Betriebsparameter entbehrlich und trägt somit zu kurzen Rüstzeiten bei.

Die vorliegende Erfindung ist in gleicher Weise anwendbar auf solche Spritzgießmaschinen, die über ein einziges, zusammenhängendes Hydrauliksystem verfügen, wie auch auf solche Spritzgießmaschinen, bei denen das Hydrauliksystem mehrere abgegrenzte Untersysteme, die jeweils einer Funktion bzw. mehreren Funktionen zugeordnet sind und jeweils mindestens einen eigenen Hydraulikspeicher umfassen, aufweist. Ebensowenig spielt für die technische Umsetzung der vorliegenden Erfindung eine Rolle, ob der mindestens eine hydraulische Verbraucher ausschließlich über den Hydraulikspeicher beaufschlagbar oder aber, gemäß einer bevorzugten Weiterbildung der vorliegenden Erfindung, auch mittels eines Ventils über eine direkte Verbindung von der Hydraulikpumpe beaufschlagbar ist.

Eine wiederum andere bevorzugte Weiterbildung der erfindungsgemäßen Spritzgießmaschine zeichnet sich durch einen Betriebsartenschalter aus, mittels dessen sich die von der Steuereinheit festgelegten Druckgrenzwerte durch andere Druckgrenzwerte ersetzen lassen. Dies erweist sich beispielsweise als günstig bei solchen Spritzgießmaschinen, die regelmäßig in einen Standby-Betrieb geschaltet werden; denn durch Betätigen des Betriebsartenschalters lassen sich in diesem Falle die von der Steuereinheit für den Betriebsmodus festgelegten Druckgrenzwerte vorübergehend durch reduzierte Druckgrenzwerte für den Standby-Betrieb ersetzen, was sowohl im Hinblick auf den Energieverbrauch der Spritzgießmaschine wie auch unter Gesichtspunkten der Materialschonung vorteilhaft ist.

Im folgenden wird die vorliegende Erfindung anhand eines in der Zeichnung veranschaulichten bevorzugten Ausführungsbeispiels näher erläutert. Dabei zeigt
- Fig. 1: eine schematische Ansicht einer Spritzgießmaschine nach der vorliegenden Erfindung mit einem auf die hier maßgeblichen Elemente vereinfachten Hydraulikschaltplan und
- Fig. 2: eine Einrichtung zur Veränderung des wirksamen Speichervolumens des mindestens einen Hydraulikspeichers unabhängig von den Druckverhältnissen der Hydraulikseite und
- Fig. 3: veranschaulicht eine Ausführungsmöglichkeit der Erfindung anhand eines Flußdiagramms.

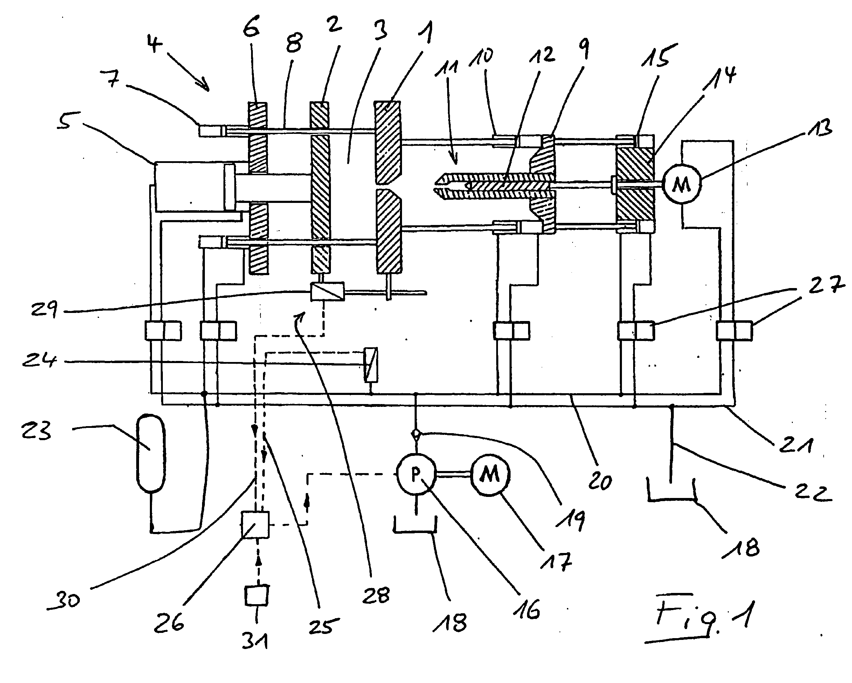

Die in Fig. 1 veranschaulichte Spritzgießmaschine umfaßt eine feststehende Formaufspannplatte 1 und eine bewegbare Formaufspannplatte 2, welche gemeinsam den Werkzeugeinbauraum 3 definieren. Auf die bewegbare Formaufspannplatte 2 wirkt eine Schließeinheit 4. Diese ist zweistufig ausgeführt, indem sie getrennte Hydraulikzylinder für den Eilantrieb einerseits und den Kraftantrieb andererseits umfaßt. In diesem Sinne wirkt auf die bewegbare Formaufspannplatte 2 der das Kraftschließen bewirkende Schließzylinder 5, der sich an einer Endplatte 6 abstützt. Auf die Endplatte 6 ihrerseits wirken dem Eilvorschub dienende Fahrzylinder 7, deren Kolben an Zugstangen 8 angeordnet sind, welche mit der feststehenden Formaufspannplatte 1 fest verbunden sind und auf denen die bewegbare Formaufspannplatte 2 und die Endplatte 6 verschiebbar geführt sind.

Einspritzseitig umfaßt die Spritzgießmaschine in als solches bekannter Weise eine Schneckenzylinderaufnahme 9. Dieser ist mittels der Hydraulikzylinder 10 dergestalt relativ zur feststehenden Formaufspannplatte 1 verfahrbar, daß die Düse 11 aus ihrer in der Zeichnung dargestellten Stellung in eine dichtend an der feststehenden Formaufspannplatte 1 anliegende Stellung gebracht werden kann. Dem Antrieb der Schnecke 12 dient ein Hydraulikmotor 13, welcher an einem Motorträger 14 angebaut ist. Über Einspritzzylinder 15 steht der Motorträger 14 mit der Schneckenzylinderaufnahme 9 in Verbindung.

Die Hydraulikanlage der Spritzgießmaschine nach Fig. 1 umfaßt eine Hydraulikpumpe 16, welche von einem Motor 17 angetrieben wird. Die Hydraulikpumpe 16 fördert Hydraulikflüssigkeit aus dem Tank 18 über ein Rückschlagventil 19 in die Hochdruckleitung 20. Die Niederdruckleitung 21 ist über die Rücklaufleitung 22 zum Tank 18 hin geöffnet.

Die Hochdruckleitung 20 steht mit einem Hydraulikspeicher 23 in Verbindung. Ferner ist an die Hochdruckleitung 20 ein Drucksensor 24 angeschlossen. Dieser steht über eine Signalleitung 25 mit einer Steuereinheit 26 in Verbindung. In Abhängigkeit von dem in der Hochdruckleitung 20 herrschenden, über den Druckspeicher 23 abgepufferten Druck schaltet die Steuereinheit 26 die Hydraulikpumpe 16 dergestalt zu bzw. ab, daß die Hydraulikpumpe 16 beim Unterschreiten eines unteren Druckgrenzwerts in der Hochdruckleitung 20 zum Laden des Druckspeichers 23 zugeschaltet und beim Erreichen bzw. Überschreiten eines oberen Druckgrenzwerts in der Hochdruckleitung 20 abgeschaltet, d. h. bei weiter laufendem Antriebsmotor 17 auf Nullförderung geschaltet wird.

In der den Hydraulikspeicher 23 mit der Hochdruckleitung 20 verbindenden Leitung kann - ohne daß dies zeichnerisch veranschaulicht ist - ein Ventil vorgesehen sein, welches von der Steuereinheit steuerbar ist. Mittels dieses Ventils läßt sich insbesondere die betreffende Leitung sperren, um bei bestimmten Betriebszuständen gezielt das Laden des Hydraulikspeichers 23 zu unterbinden, beispielsweise um bei einem vergleichsweise niedrigen Druckniveau im Hydraulikspeicher einen der hydraulischen Verbraucher direkt bei hohem Druck mit der gesamten Fördermenge der Hydraulikpumpe 16 zu beaufschlagen.

Die Spritzgießmaschine nach Fig. 1 umfaßt somit insgesamt fünf funktionsverschiedene hydraulische Verbraucher, welche jeweils entsprechend dem jeweiligen Spritzgießprozeß über ein von einer - nicht dargestellten - Steuereinheit angesteuertes Steuerventil 27 mit Hydraulikflüssigkeit aus der Hochdruckleitung 20 beaufschlagt werden. In dem vorstehend aufgezeigten Umfang entspricht die Spritzgießmaschine gemäß Fig. 1 dem hinlänglich bekannten Stand der Technik, so daß es weiterer Erläuterungen nicht bedarf.

Die Spritzgießmaschine umfaßt in Anwendung der vorliegenden Erfindung ferner einen Betriebsparameteraufnehmer 28, der im Falle des veranschaulichten Ausführungsbeispiels als Wegaufnehmer 29 ausgeführt ist, welcher zwischen der feststehenden Formaufspannplatte 1 und der Endplatte 6 angeordnet ist. Über eine Signalleitung 30 ist der Wegaufnehmer 29 mit der Steuereinheit 26 verbunden. Auf diese Weise wird die Steuereinheit 26 in die Lage versetzt, im Rahmen der Steuerung der Hydraulikpumpe 16 neben dem von dem Drucksensor 24 bereitgestellten Drucksignal betreffend den Druck in der Hochdruckleitung 20 auch den von dem Betriebsparameteraufnehmer 28 überwachten Betriebsparameter, vorliegend die von dem Wegaufnehmer 29 ermittelte Stellung der beweglichen Platte 2 relativ zur feststehenden Formaufspannplatte 1, zu berücksichtigen. Die Verarbeitung der Signale des Drucksensors 24 einerseits und des Wegaufnehmers 29 andererseits kann dabei insbesondere dergestalt erfolgen, daß der Drucksensor den am Ende der Schließbewegung der beweglichen Platte 2 in der Hochdruckleitung 20 herrschenden Druck ermittelt, wobei jenes Ende der Schließbewegung der beweglichen Platte 2 von dem Wegaufnehmer 29 erfaßt wird. Der zu jenem Betriebspunkt bestehende Druck in der Hochdruckleitung 20 wird mit einem in der Steuereinheit 26 hinterlegten Referenzdruck verglichen. Überschreitet der tatsächliche Druck jenen Referenzdruck, so wird der obere Druckgrenzwert selbsttätig nach unten korrigiert. Bleibt indessen der tatsächliche Druck hinter dem Referenzdruck zurück, so wird der obere Druckgrenzwert entsprechend angehoben.

Alternativ oder additiv zu dem Wegaufnehmer 29 können andere bzw. weitere Betriebsparameteraufnehmer vorgesehen sein, die in entsprechender Weise mit der Steuereinheit 26 in Verbindung stehen und dieser die Meßwerte des jeweils überwachten Betriebsparameters zur Verarbeitung im Rahmen der Ermittlung des jeweils günstigsten oberen und/oder unteren Druckgrenzwerts zur Verfügung stellen. In Betracht kommt in diesem Zusammenhang insbesondere die Ausführung des/der Betriebsparameteraufnehmer(s) als Druckaufnehmer, der/die als Betriebsparameter den Druck im Werkzeug, im Angußkanal, im Spritzzylinder und/oder im Schließzylinder überwacht/ überwachen, als Kraftaufnehmer, der als Betriebsparameter die Schließkraft der Schließeinheit überwacht, und als Wegaufnehmer, der als Betriebsparameter den Vorschub der Einspritzschnecke überwacht. Jeweils werden der obere und/oder der untere Druckgrenzwert durch eine in die Steuereinheit implementierte Routine selbsttätig unter Berücksichtigung der von dem/den jeweiligen Betriebsparameteraufnehmer(n) bereitgestellten Meßwerts/ Meßwerten im Hinblick auf den jeweiligen Spritzgießprozeß optimiert. Aufgrund der prinzipiell vergleichbaren Funktionsweise entsprechender Alternativen mit der vorstehend beschriebenen Ausführungsform kann auf eine eingehende Erläuterung verzichtet werden.

Mit der Steuereinheit 26 steht ein Betriebsartenschalter 31 in Verbindung. Mit diesem läßt sich der Betriebsmodus der Spritzgießmaschine verändern, beispielsweise indem die Steuerung durch einfachen Knopfdruck aus einem dem Arbeitsbetrieb entsprechenden ersten Betriebsmodus in einen dem Stand-by-Betrieb entsprechenden zweiten Betriebsmodus geschaltet wird, in welchem - bei anhaltender Funktionsbereitschaft der Spritzgießmaschine - der obere und der untere Druckgrenzwert reduziert sind.

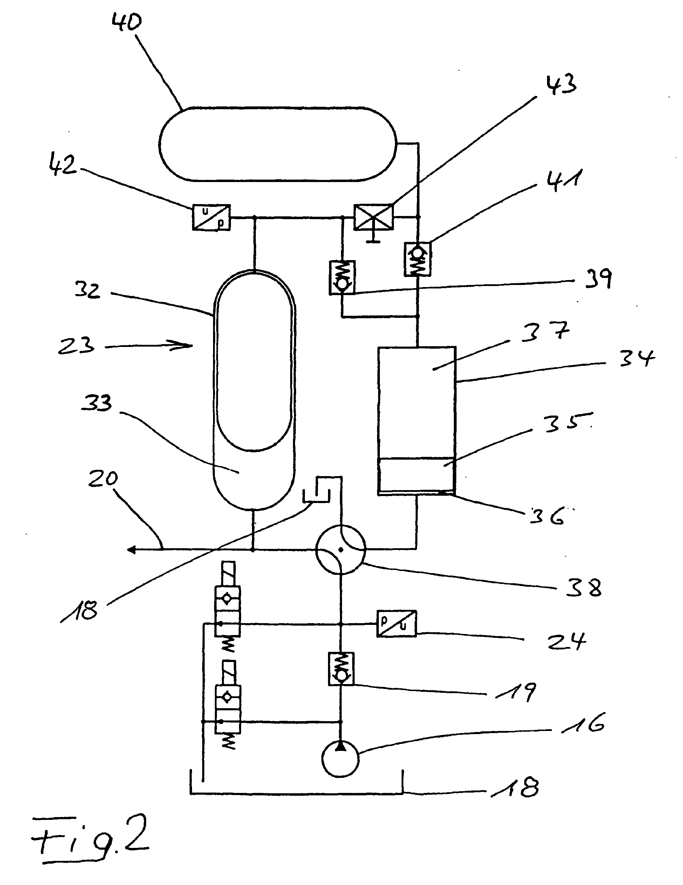

Fig. 2 veranschaulicht eine Einrichtung zur Veränderung des wirksamen Speichervolumens des mindestens einen Hydraulikspeichers 23 durch Vorfülldruckvariation unabhängig von den Druckverhältnissen, wie sie besonders bevorzugt in Verbindung mit einer Spritzgießmaschine der in Fig. 1 gezeigten Art eingesetzt wird. So, wie dies in Fig. 1 dargestellt ist, wird eine Hochdruckleitung 20 über ein Rückschlagventil 19 von einer Hydraulikpumpe 16 gespeist. An die Hochdruckleitung 20 ist ein Hydraulikspeicher 23 angeschlossen. Dieser ist als Blasenspeicher ausgeführt mit einer innerhalb des Gehäuses 32 angeordneten Speicherblase 33. Der Raum zwischen der Speicherblase 33 und dem Gehäuse 32 dient als Ausgleichsraum für die akkumulierte Hydraulikflüssigkeit, während die Speicherblase 33 selbst mit einem Gas gefüllt ist.

Der Vorspanndruck des in der Speicherblase 33 komprimierten Gases läßt sich unter Nutzung der Hydraulikpumpe 16 variieren. Hierzu ist ein Verdichterylinder 34 vorgesehen, dessen frei beweglicher Verdichterkolben 35 einen hydraulischen Arbeitsraum 36 von einem Gasraum 37 abtrennt. Durch entsprechende Ansteuerung des 4/2 Wege-Umschaltventils 38 läßt sich der hydraulische Arbeitsraum 36 mit von der Hydraulikpumpe 16 geförderter Hydraulikflüssigkeit beaufschlagen. Das in dem Gasraum 37 eingeschlossene Gas wird komprimiert und, sobald der in der Speicherblase 33 herrschende Druck überschritten wird, über das Rückschlagventil 39 in die Speicherblase 33 verdrängt. Wird das 4/2 Wege-Umschaltventil 38 umgesteuert, wird der hydraulische Arbeitsraum 36 durch Verbindung mit dem Tank 18 drucklos gemacht; Gas, welches in dem Gas-Zusatzbehälter 40 unter geringem Vorspanndruck gehalten wird, gelangt über das Rückschlagventil 41 in den Gasraum 37 des Verdichterzylinders 34 und verdrängt den Verdichterkolben 35. Bei erneuter Umsteuerung des 4/2 Wege-Umschaltventils 38 beginnt der Vorgang von neuem.

In Verbindung mit der in Fig. 1 veranschaulichten Spritzgießmaschine läßt sich die Einrichtung nach Fig. 2 mit besonderem Vorteil dergestalt einsetzen, daß unter Berücksichtigung der von der Steuerung 26 ermittelten optimalen Druckgrenzwerte die wirksame Größe des Speichervolumens des Hydraulikspeichers 23 in Abhängigkeit von den von den Betriebsparameteraufnehmern erfaßten Meßwerten festgelegt wird. Wird beispielsweise der obere Druckgrenzwert unter Verringerung der Druckdifferenz zwischen dem unteren und dem oberen Druckgrenzwert abgesenkt, so kann durch entsprechende Anpassung der wirksamen Größe des Speichervolumens die in dem Hydraulikspeicher akkumulierte Menge an Hydraulikflüssigkeit unabhängig von den Druckverhältnissen an den tatsächlichen Bedarf angepaßt werden.

Der Gasdruck in der Speicherblase 33 wird über einen Drucksensor 42 überwacht. Jener Drucksensor 42 steuert das weiter oben beschriebene Vorspannen der Speicherblase 33 bzw. ggfs. die Absenkung des Vorspanndrucks der Speicherblase durch Öffnen des Rückströmventils 43, um die wirksame Größe des Speichervolumens an die jeweiligen Verhältnisse anzupassen. In diesem Sinne steht bei einer Integration der Einrichtung nach Fig. 2 in die Spritzgießmaschine nach Fig. 1 auch der Drucksensor 42 mit der Steuereinheit 26 in Verbindung, und die Steuereinheit 26 steuert in Abhängigkeit von den verschiedenen erfaßten Betriebsparametern nicht nur die Hydraulikpumpe 16 sondern auch das 4/2 Wege-Umschaltventil 38 sowie das Rückströmventil 43.

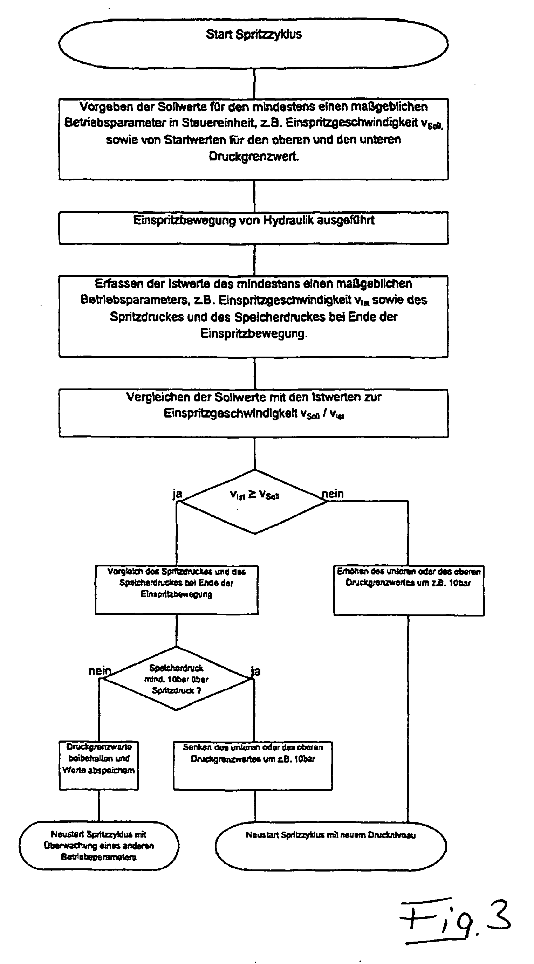

In der Steuereinheit der in den Fig. 1 und 2 veranschaulichten Spritzgießmaschine kann beispielsweise der in Fig. 3 durch ein Flußdiagramm wiedergegebene Prozeß ablaufen, durch den unter Überwachung und Auswertung mindestens eines den Spritzzyklus charakterisierenden Betriebsparameters das Druckniveau des Hydrauliksystems automatisch an den jeweiligen Spritzzyklus adaptiert wird. Als maßgeblicher Betriebsparameter wird in dem veranschaulichten Fall die Einspritzgeschwindigkeit, d.h. die Geschwindigkeit der Einspritzbewegung, herangezogen. Zu diesem Zweck wird ein Sollwert für die Einspritzgeschwindigkeit vorgegeben. Des weiteren werden Startwerte für den oberen und den unteren Druckgrenzwert vorgegeben, mit welchen in den in Fig. 3 veranschaulichten Prozeß eingetreten wird. Während eines ersten Spritzzyklus wird die tatsächlich erreichte Einspritzgeschwindigkeit erfaßt; ebenso werden der am Ende der Einspritzbewegung herrschende Spritzdruck und Speicherdruck erfaßt.

Der tatsächlich erreichte Wert der Einspritzgeschwindigkeit wird mit dem vorgegebenen Sollwert verglichen. Erreicht dabei die tatsächliche Einspritzgeschwindigkeit nicht den vorgegebenen Sollwert, so wird mindestens einer der beiden Druckgrenzwerte erhöht. Ob nun der untere Druckgrenzwert, der obere Druckgrenzwert oder aber beide Druckgrenzwerte erhöht werden, kann sich dabei insbesondere in Abhängigkeit von weiteren überwachten Betriebsparametern ergeben, nachdem sich dies unter anderem auf die wirksame Kapazität des Hydraulikspeichers auswirkt. Zur Vereinfachung des Schaubilds ist allerdings auf eine Darstellung der insoweit durchzuführenden weiteren Abfrage verzichtet worden.

Erreicht die tatsächliche Einspritzgeschwindigkeit hingegen den vorgegebenen Sollwert oder überschreitet sie diesen sogar, so bedeutet dies nicht zwingend, daß die betreffende Einstellung der beiden Druckgrenzwerte beibehalten wird. Vielmehr erfolgt in diesem Falle eine Prüfung, ob nicht - zur Steigerung des Wirkungsgrads der Spritzgießmaschine - eine Absenkung des Druckniveaus des Hydraulikspeichers ohne nachteilige Auswirkungen auf den Spritzgießprozeß möglich ist. Hierzu wird der beim Ende der Einspritzbewegung herrschende Spritzdruck mit dem zu diesem Zeitpunkt herrschenden Speicherdruck verglichen. Nur in dem Falle, daß der Speicherdruck weniger als 10 bar über dem Spritzdruck liegt, ergibt sich keine Veränderung der beiden Druckgrenzwerte gegenüber den eingangs vorgegebenen Startwerten. Denn in jenem Falle, daß der Speicherdruck mindestens 10 bar über dem Spritzdruck liegt, ist erkennbar, daß eine Absenkung des Druckniveaus des Hydraulikspeichers ohne nachteilige Auswirkungen auf den Spritzgießprozeß möglich ist. Ob dabei der untere Druckgrenzwert, der obere Druckgrenzwert oder aber beide Druckgrenzwerte abgesenkt werden, kann sich wiederum in Abhängigkeit von weiteren überwachten Betriebsparametern ergeben, weil hiervon wiederum die wirksame Kapazität des Hydraulikspeichers beeinflußt wird (s.o.).

Selbst wenn sich allein aus dem auf der Überwachung der Einspritzgeschwindigkeit aufbauenden Lehrzyklus keine Notwendigkeit, den unteren und/oder den oberen Druckgrenzwert gegenüber dem eingangs vorgegebenen Startwert zu verändern, ergibt, bedeutet dies noch nicht zwingend, daß diese Druckgrenzwerte für den betreffenden Spritzgießprozeß optimal sind. Denn ggfs. ergibt sich aus einem Lehrzyklus, welcher auf der Überwachung eines anderen Betriebsparameters als der Einspritzgeschwindigkeit aufbaut, daß eine bestimmte Anpassung mindestens eines der beiden Druckgrenzwerte zweckmäßig ist. Insoweit kann sich an den in Fig. 3 veranschaulichten Lehrzyklus, welcher auf einer Überwachung der Einspritzgeschwindigkeit aufbaut, mindestens ein weiterer Lehrzyklus anschließen, in welchem ein anderer charakteristischer Betriebsparameter der Einspritzmaschine überwacht und zur Beeinflussung des Druckniveaus des Hydraulikspeichers herangezogen wird.

## Patentansprüche

1. Spritzgießmaschine mit einer Schließeinheit (4) und mindestens einer Plastifizier- und Einspritzeinheit, wobei mindestens ein diskontinuierlich betätigbarer hydraulischer Verbraucher (5, 7, 10, 13, 15) vorgesehen ist, mit den folgenden Merkmalen:
- der mindestens eine hydraulische Verbraucher ist über ein Ventil (27), das von einer Steuereinheit (26) betätigbar ist, von mindestens einem Hydraulikspeicher (23) beaufschlagbar;
- der mindestens eine Hydraulikspeicher (23) ist von einer Hydraulikpumpe (16) speisbar;
- dem mindestens einen Hydraulikspeicher (23) ist ein Drucksensor (24), der mit der Steuereinheit (26) in Verbindung steht, zugeordnet, wobei die Hydraulikpumpe (16) von der Steuereinheit (26) zugeschaltet wird, wenn der von dem Drucksensor (24) überwachte Druck einen unteren Druckgrenzwert erreicht bzw. unterschreitet, und abgeschaltet wird, wenn der von dem Drucksensor (24) überwachte Druck einen oberen Druckgrenzwert erreicht bzw. überschreitet; **gekennzeichnet durch** die folgenden Merkmale:
- die Spritzgießmaschine weist mindestens einen als Druckaufnehmer, als Kraftaufnehmer oder als Wegmeßsystem ausgeführten Betriebsparameteraufnehmer (28) auf, der mit der Steuereinheit (26) in Verbindung steht und während mindestens eines Meßzyklus' Meßwerte zu dem mindestens einen überwachten Betriebsparameter an die Steuereinheit (26) meldet;
- die Steuereinheit (26) legt mindestens einen der beiden Druckgrenzwerte in Abhängigkeit von den **durch** den mindestens einen Betriebsparameteraufnehmer aufgenommenen Meßwerten fest.

2. Spritzgießmaschine nach Anspruch 1,
**dadurch gekennzeichnet,**
**daß** das Speichervolumen des mindestens einen Hydraulikspeichers (23) unabhängig von den Druckverhältnissen im Hydraulikspeicher (23) variabel ist, wobei die Steuereinheit (26) die wirksame Größe des Speichervolumens in Abhängigkeit von den Meßwerten festlegt.

3. Spritzgießmaschine nach Anspruch 2,
**dadurch gekennzeichnet,**
**daß** der Vorfülldruck des mindestens einen Hydraulikspeichers (23) variabel ist.

4. Spritzgießmaschine nach einem der Ansprüche 1 bis 3,
**dadurch gekennzeichnet,**
**daß** als Betriebsparameteraufnehmer (28) ein Druckaufnehmer vorgesehen ist, der als Betriebsparameter den Druck im Werkzeug, im Angußkanal oder im Spritzzylinder (15) überwacht.

5. Spritzgießmaschine nach einem der Ansprüche 1 bis 4,
**dadurch gekennzeichnet,**
**daß** als Betriebsparameteraufnehmer (28) ein Druckaufnehmer vorgesehen ist, der als Betriebsparameter den Druck im Schließzylinder (5) überwacht.

6. Spritzgießmaschine nach einem der Ansprüche 1 bis 5,
**dadurch gekennzeichnet,**
**daß** als Betriebsparameteraufnehmer (28) ein Kraftaufnehmer vorgesehen ist, der als Betriebsparameter die Schließkraft der Schließeinheit (4) überwacht.

7. Spritzgießmaschine nach einem der Ansprüche 1 bis 6,
**dadurch gekennzeichnet,**
**daß** als Betriebsparameteraufnehmer (28) ein Wegmeßsystem vorgesehen ist, das als Betriebsparameter den Vorschub der Einspritzschnecke (12) überwacht.

8. Spritzgießmaschine nach einem der Ansprüche 1 bis 7,
**dadurch gekennzeichnet,**
**daß** als Betriebsparameteraufnehmer (28) ein Wegmeßsystem vorgesehen ist, das als Betriebsparameter den Schließweg der Schließeinheit (4) überwacht.

9. Spritzgießmaschine nach einem der Ansprüche 1 bis 8,
**dadurch gekennzeichnet,**
**daß** ein Leerzyklus ohne Einspritzung einen Meßzyklus bildet.

10. Spritzgießmaschine nach einem der Ansprüche 1 bis 8,
**dadurch gekennzeichnet,**
**daß** ein Arbeitszyklus mit Einspritzung einen Meßzyklus bildet.

11. Spritzgießmaschine nach einem der Ansprüche 1 bis 10,
**dadurch gekennzeichnet,**
**daß** sie mehrere jeweils einer Funktion bzw. mehreren Funktionen zugeordnete Untersysteme mit jeweils mindestens einem eigenen Hydraulikspeicher (23) umfaßt.

12. Spritzgießmaschine nach einem der Ansprüche 1 bis 11,
**dadurch gekennzeichnet,**
**daß** mittels eines Ventils (27) eine direkte Verbindung zwischen der Hydraulikpumpe (16) und mindestens einem hydraulischen Verbraucher herstellbar ist.

13. Spritzgießmaschine nach einem der Ansprüche 1 bis 12,
**dadurch gekennzeichnet,**
**daß** sie eine Speichereinheit zur Abspeicherung der von der Steuereinheit (26) festgelegten Druckgrenzwerte und ggfs. wirksamen Speichervolumina auf einem Datenspeicher aufweist.

14. Spritzgießmaschine nach einem der Ansprüche 1 bis 13,
**dadurch gekennzeichnet**,
sich die von der Steuereinheit (26) festgelegten Druckgrenzwerte mittels eines Betriebsartenschalters (31) durch andere Druckgrenzwerte ersetzen lassen.

## Claims

1. An injection moulding machine with a clamping unit (4) and at least one plasticizing and injection unit, wherein at least one hydraulic consumer (5, 7, 10, 13, 15) that can be discontinuously actuated is provided with the following features:
- the at least one hydraulic consumer can be pressurized from an hydraulic accumulator (23) via a valve (27) which can be actuated from a control unit (26);
- the at least one hydraulic accumulator (23) can be fed by a hydraulic pump (16)!
- the at least one hydraulic accumulator (23) is associated with a pressure sensor (24) which is connected with the control unit (26), wherein the hydraulic pump (16) is switched on by the control unit (26) when the pressure monitored by the pressure sensor (24) reaches or falls below a lower pressure limit value and is switched off when the pressure monitored by the pressure sensor (24) reaches or exceeds an upper pressure limit value; **characterized by** the following features:
- the injection moulding machine has at least one operating parameter pickup (28) embodied as pressure pickup, force pickup or as path measuring system, which is connected with the control unit (26) and during at least one measuring cycle signals measurements regarding the at least one monitored operating parameter to the control unit (26);
- the control unit (26) determines at least one of the two pressure limit values as a function of the measurements picked up by the at least one operating parameter pickup.

2. The injection moulding machine according to claim 1, **characterized in that** the accumulation volume of the at least one hydraulic accumulator (23) is variable regardless of the pressure conditions in the hydraulic accumulator (23), wherein the control unit (26) determines the effective quantity of the accumulator volume as a function of the measurements.

3. The injection moulding machine according to claim 2, **characterized in that** the pre-filling pressure of the at least one hydraulic accumulator (23) is variable.

4. The injection moulding machine according to any one of the claims 1 to 3, **characterized in that** as operating parameter pickup (28) a pressure pickup is provided which, as operating parameter, monitors the pressure in the mould, in the runner or in the injection cylinder (15).

5. The injection moulding machine according to any one of the claims 1 to 4, **characterized in that** as operating parameter pickup (28) a pressure pickup is provided which, as operating parameter, monitors the pressure in the clamping cylinder (5).

6. The injection moulding machine according to any one of the claims 1 to 5, **characterized in that** as operating parameter pickup (28) a force pickup is provided which, as operating parameter, monitors the clamping force of the clamping unit (4).

7. The injection moulding machine according to any one of the claims 1 to 6, **characterized in that** as operating parameter pickup (28) a path measuring system is provided which, as operating parameter, monitors the feed of the injection screw (12).

8. The injection moulding machine according to any one of the claims 1 to 7, **characterized in that** as operating parameter pickup (28) a path measuring system is provided which, as operating parameter, monitors the clamping path of the clamping unit (4).

9. The injection moulding machine according to any one of the claims 1 to 8, **characterized in that** a blank cycle without injection forms a measuring cycle.

10. The injection moulding machine according to any one of the claims 1 to 8, **characterized in that** a work cycle with injection forms a measuring cycle.

11. The injection moulding machine according to any one of the claims 1 to 10, **characterized in that** it comprises a plurality of sub-systems each associated with a function or a plurality of functions each with at least one separate hydraulic accumulator.

12. The injection moulding machine according to any one of the claims 1 to 11, **characterized in that** by means of a valve (27) a direct connection between the hydraulic pump (16) and at least one hydraulic consumer can be established.

13. The injection moulding machine according to any one of the claims 1 to 12, **characterized in that** it has a storage device for the storage of the pressure limit values determined by the control unit (26) and, if applicable, effective accumulator volumes on a data memory.

14. The injection moulding machine according to any one of the claims 1 to 13, **characterized in that** the pressure limit values determined by the control unit (26) can be replaced with other pressure limit values by means of an operating mode switch (31).

## Revendications

1. Machine de moulage par injection, avec une unité de fermeture (4) et au moins une unité de plastification et d'injection, comportant au moins un utilisateur hydraulique (5, 7, 10, 13, 15) actionnable en discontinu, possédant les caractéristiques suivantes :
- l'utilisateur hydraulique, au moins au nombre de un, peut être alimenté par au moins un réservoir hydraulique (23), par le biais d'une soupape (27) actionnable au moyen d'une unité de commande (26) ;
- le réservoir hydraulique (23), au moins au nombre de un, peut être alimenté par une pompe hydraulique (16) ;
- un détecteur de pression (24) relié à l'unité de commande (26) est attribué au réservoir hydraulique (23), au moins au nombre de un, la pompe hydraulique (16) étant fermée au moyen de l'unité de commande (26) lorsque pression surveillée par le détecteur de pression (24) atteint ou dépasse une valeur seuil minimale, et arrêtée lorsque la pression surveillée par le détecteur de pression (24) atteint ou dépasse une valeur seuil maximale;
**caractérisée par** les caractéristiques suivantes:
- la machine de moulage par injection comporte au moins un capteur de paramètres de fonctionnement (28) conçu comme un capteur de pression, un capteur de puissance ou un système de mesure de déplacement, qui se trouve en liaison avec l'unité de commande (26) et qui communique des valeurs de mesure concernant le paramètre de fonctionnement surveillé, au moins au nombre de un, à l'unité de commande (26) au cours d'au moins un cycle de mesure ;
- l'unité de commande (26) fixe au moins l'une deux valeurs seuil de pression en fonction des valeurs de mesure captées au moyen du capteur de paramètres de fonctionnement.

2. Machine de moulage par injection selon la revendication 1,
**caractérisée en ce que**
le volume de réserve du réservoir hydraulique (23), au moins au nombre de un, est variable indépendamment des rapports de pression dans le réservoir hydraulique (23), l'unité de commande (26) déterminant la taille adéquate du volume de réserve en fonction des valeurs de mesure.

3. Machine de moulage par injection selon la revendication 2,
**caractérisée en ce que**
la pression de pré-remplissage du réservoir hydraulique (23), au moins au nombre de un, est variable.

4. Machine de moulage par injection selon l'une des revendications 1 à 3,
**caractérisée en ce que**
un capteur de pression est prévu en tant que capteur de paramètres de fonctionnement (28), permettant de surveiller le paramètre de fonctionnement relatif à la pression dans l'outil, dans le canal d'injection ou dans le cylindre d'injection (15).

5. Machine de moulage par injection selon l'une des revendications 1 à 4,
**caractérisée en ce que**
un capteur de pression est prévu en tant que capteur de paramètres de fonctionnement (28), permettant de surveiller le paramètre de fonctionnement relatif à la pression dans le cylindre de fermeture (5).

6. Machine de moulage par injection selon l'une des revendications 1 à 5,
**caractérisée en ce que**
un capteur de puissance est prévu en tant que capteur de paramètres de fonctionnement (28), permettant de surveiller le paramètre de fonctionnement relatif à la puissance de fermeture de l'unité de fermeture (4).

7. Machine de moulage par injection selon l'une des revendications 1 à 6,
**caractérisée en ce que**
un système de mesure de déplacement est prévu comme capteur de paramètres de fonctionnement (28), permettant de surveiller le paramètre de fonctionnement relatif à l'avancement de la vis sans fin d'injection (12).

8. Machine de moulage par injection selon l'une des revendications 1 à 7,
**caractérisée en ce que**
un système de mesure de déplacement est prévu en tant que capteur de paramètres de fonctionnement (28), permettant de surveiller le paramètre de fonctionnement relatif à la course de fermeture de l'unité de fermeture (4).

9. Machine de moulage par injection selon l'une des revendications 1 à 8,
**caractérisée en ce que**
un cycle à vide sans injection forme un cycle de mesure.

10. Machine de moulage par injection selon l'une des revendications 1 à 8,
**caractérisée en ce que**
un cycle de travail avec injection forme un cycle de mesure.

11. Machine de moulage par injection selon l'une des revendications 1 à 10,
**caractérisée en ce que**
elle comprend plusieurs sous-systèmes attribués chacun à une fonction ou à plusieurs fonctions, possédant chacun au moins un propre réservoir hydraulique (23).

12. Machine de moulage par injection selon l'une des revendications 1 à 12,
**caractérisée en ce que**
une soupape (27) permet de réaliser une liaison directe entre la pompe hydraulique (16) et au moins un utilisateur hydraulique.

13. Machine de moulage par injection selon l'une des revendications 1 à 12,
**caractérisée en ce que**
elle comporte une unité de mémoire pour mémoriser les valeurs seuil de la pression fixées par l'unité de commande (26) ou les volumes de réserve adéquats sur une mémoire de données.

14. Machine de moulage par injection selon l'une des revendications 1 à 13,
**caractérisée en ce que**
les valeurs de pression seuil fixées par l'unité de commande (26) peuvent être remplacées par d'autres valeurs de pression seuil au moyen d'un commutateur de modes de fonctionnement (31).
